# EUROPEAN PATENT APPLICATION

(11) **EP 1 785 476 A1**
(43) Date of publication of application: **16.05.2007**
(21) Application number: 06023240.2
(22) Date of filing: 08.11.2006
(51) Int. Cl.: C10M 161/00, C10M 169/04, C10N 30/06, C10N 30/08, C10N 30/10, C10N 40/04, C10N 20/02

(54) **Lubricant composition**

(30) Priority: 03.05.2006 US 417343; 09.11.2005 US 734757 P
(71) Applicant: Afton Chemical Corporation, Richmond, VA 23219 (US)
(72) Inventor: Phillips, Ronald L., Richmond, Virginia 23235 (US); DeGonia, David J., Midlothian, Virginia 23114 (US); Hewette, Chip, Richmond, Virginia 23233 (US)
(74) Representative: Schwabe - Sandmair - Marx

(57) **Abstract**

A lubricating composition including an ester; a viscosity index improver; and at least one of a sterically hindered suifur-containing, phosphorus-containing compound, and its salt.

## Description

### Related Applications

This application claims the benefit of priority of U.S. Provisional Application No. 60/734,757, filed on November 9, 2005.

### Field of the Disclosure

The present disclosure relates to a composition comprising an ester; a viscosity index improver; and at least one of a sulfur-containing, phosphorus-containing compound and its salt. Methods of using the composition are also disclosed.

### Background of the Disclosure

Lubricant compositions, such as gear oils, typically are subjected to elevated temperatures and therefore it would be beneficial to provide a thermally stable compound that would not prematurely decompose at higher temperatures. A thermally stable compound would therefore remain in the lubricant composition for an extended period of time and provide the property, e.g., antiwear, to the composition over an extended period of time. What is needed is a compound that has the proper thermal stability to sustain its antiwear property.

Moreover, as automobile manufacturers continue to make bigger trucks with larger more powerful engines the amount of torque on the axles has increased. Unfortunately, the axles of these trucks have not been updated to account for the increased torque because of cost. So, the manufacturers have become increasingly reliant on improved lubricant compositions to extend the life of the axles, which is the cheapest solution to the problem. In particular, what is needed is a lubricant composition with at least one of improved antiwear, thermal stability, and oxidative stability in axles that are "green," i.e., have not been broken in for some time period or distance. Moreover, there is need for a lubricant composition as discussed above that can be used in axles that are subjected to low and high temperature and variable load conditions. Further, there is needed a lubricant composition that can provide at least one of improved antiwear and fuel efficiency.

### SUMMARY OF THE DISCLOSURE

In accordance with the present disclosure, a lubricating composition may comprise an ester; a viscosity index improver; and at least one of a sterically hindered sulfur-containing, phosphorus-containing compound and a salt of the sulfur-containing, phosphorus-containing compound.

In an aspect, there is disclosed a lubricating composition comprising an ester; a viscosity index improver; and a reaction product of a sulfur-containing compound, a phosphorus-containing compound and a nitrogen-containing compound.

Additional objects and advantages of the disclosure will be set forth in part in the description which follows, and/or can be learned by practice of the disclosure. The objects and advantages of the disclosure will be realized and attained by means of the elements and combinations particularly pointed out in the appended claims.

It is to be understood that both the foregoing general description and the following detailed description are exemplary and explanatory only and are not restrictive of the disclosure, as claimed.

### DESCRIPTION OF THE EMBODIMENTS

As used herein, the term "hydrocarbyl substituent" or "hydrocarbyl group" is used in its ordinary sense, which is well-known to those skilled in the art. Specifically, it refers to a group having a carbon atom directly attached to the remainder of the molecule and having predominantly hydrocarbon character. Examples of hydrocarbyl groups include:

(1) hydrocarbon substituents, that is, aliphatic (e.g., alkyl or alkenyl), alicyclic (e.g., cycloalkyl, cycloalkenyl) substituents, and aromatic-, aliphatic-, and alicyclic-substituted aromatic substituents, as well as cyclic substituents wherein the ring is completed through another portion of the molecule (e.g., two substituents together form an alicyclic radical);

(2) substituted hydrocarbon substituents, that is, substituents containing non-hydrocarbon groups which, in the context of this invention, do not alter the predominantly hydrocarbon substituent (e.g., halo (especially chloro and fluoro), hydroxy, alkoxy, mercapto, alkylmercapto, nitro, nitroso, and sulfoxy);

(3) hetero substituents, that is, substituents which, while having a predominantly hydrocarbon character, in the context of this invention, contain other than carbon in a ring or chain otherwise composed of carbon atoms. Heteroatoms include sulfur, oxygen, nitrogen, and encompass substituents as pyridyl, furyl, thienyl and imidazolyl. In general, no more than two, for example no more than one, non-hydrocarbon substituent will be present for every ten carbon atoms in the hydrocarbyl group; typically, there will be no non-hydrocarbon substituents in the hydrocarbyl group.

As used herein, the term "percent by weight", unless expressly stated otherwise, means the percentage the recited component represents to the weight of the entire composition.

In an aspect, there is provided a composition providing at least one of improved antiwear and fuel efficiency to a gear, such as a hypoid gear axle while maintaining GL-5 and/or SAE J2360 performance. The composition can comprise several compounds and/or components that form compounds *in situ* that can comprise steric hindrance to minimize and/or prevent decomposition of the compound at high temperatures. The steric hindrance can be present in any form, such as branching of hydrocarbyl chains. For example, a beta branched hindered dialkyl acid phosphite and/or the sulfurized analogous phosphoric acid salt can be present in the disclosed composition. It is believed, without being limited to any particular theory, that a sterically hindered phosphorus-containing compound; a sterically hindered, sulfur-containing, phosphorus-containing compound and/or a salt of a sterically hindered, sulfur-containing, phosphorus-containing compound can improve the ASTM D5704 (L60) performance of a lubricant composition relative to linear and branched phosphites. The lubricant composition can be suitably used with any friction material such as paper, steel or carbon fiber.

The composition disclosed herein can comprise a phosphorus-containing compound, such as a phosphite or a phosphate. Methods of making both phosphites and phosphates are known. In an aspect, the phosphite can be a di- or tri-hydrocarbyl phosphite. Each hydrocarbyl group can have from about 1 to about 24 carbon atoms, or from 1 to about 18 carbon atoms, or from about 2 to about 8 carbon atoms. Each hydrocarbyl group can be independently alkyl, alkenyl, aryl, and mixtures thereof. When the hydrocarbyl group is an aryl group, then it contains at least about 6 carbon atoms; or from about 6 to about 18 carbon atoms. Examples of the alkyl or alkenyl groups include propyl, butyl, hexyl, heptyl, octyl, oleyl, linoleyl, stearyl, etc. Examples of aryl groups include phenyl, naphthyl, heptylphenol, etc. In an aspect, each hydrocarbyl group can be independently methyl, propyl, butyl, pentyl, hexyl, heptyl, oleyl or phenyl, for example methyl, butyl, oleyl or phenyl, and as a further example methyl, butyl, oleyl, or phenyl.

Non-limiting examples of useful phosphites include dibutyl hydrogen phosphonate, diisobutyl hydrogen phosphonate, dioleyl hydrogen phosphonate, di(C₁₄₋₁₈) hydrogen phosphonate, triphenyl phosphite, a dihydrocarbyl phosphite such as a compound of formula (I), and a polymeric phosphite, such as a compound of formula (IV) shown below. 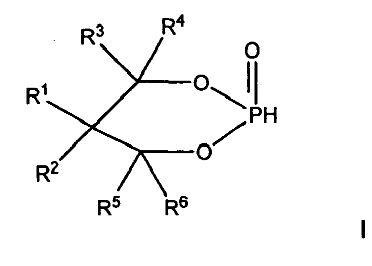 and 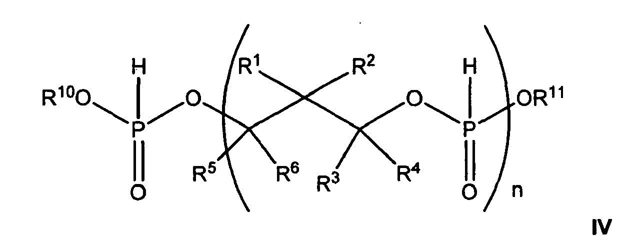 wherein n is an integer from about 1 to about 5; and
wherein R¹, R², R³, R⁴, R⁵, R⁶, R¹⁰, and R¹¹ can be independently selected from the group consisting of hydrogen, cyano, and hydrocarbyl groups comprising from about 1 to about 30 carbon atoms, for example from about 1 to about 20 carbon atoms, and as a further example from about 1 to about 10 carbon atoms. In an aspect, if n is an integer greater than about 5, it is believed, without being limited to any particular theory, that the repeating unit will not completely sulfurize.

In an aspect, in the compound of formula (I), R³, R⁴, R⁵, and R⁶ can be hydrogen; and R¹ and R² can be methyl. This compound is commonly referred to as neopentyl glycol phosphite (NPGP) and is registered with Chemical Abstracts Select under the designation CAS # 4090-60-2 (5,5-dimethyl-1,3,2-dioxaphosphorinan-2-one). In an aspect, in the compound of formula (IV), R¹ and R² can be methyl; R³, R⁴, R⁵, and R⁶ can be hydrogen; and R¹⁰ and R¹¹ can be alkyl groups having from about 1 to about 6 carbon atoms.

The phosphorus-containing compound can also be at least one of a phosphoric acid ester or salt thereof, a reaction product of a phosphorus acid or anhydride and an unsaturated compound, and mixtures of two or more thereof.

A metal dithiophosphate can be prepared by reacting a metal base with at least one thiophosphorus acids, which can be mono- or dithiophosphorus acids.

The phosphorus acid or anhydride can be reacted with an unsaturated compound, including but not limited to, amides, esters, acids, anhydrides, and ethers.

In an aspect, the phosphorus-containing compound, such as a phosphite, can comprise various functional groups that increase the steric hindrance of the compound and therefore increase its resistance to thermal decomposition. In an aspect, the phosphorus-containing compound can be branched at the position beta to the oxygen atom in the hydrocarbyl chain. It is believed that branching at this beta carbon can change, e.g., can improve, the thermal stability of the phosphorus-containing compound in a lubricant composition.

Moreover, the phosphorus-containing compound can be made using components that would increase the resultant compound's steric hindrance. For example, the alcohol used to make, for example, the phosphite can be a beta-branched alcohol. Non-limiting examples of beta branched alcohols include isobutanol, 2-ethylhexanol, neopentyl glycol, neopentyl alcohol, pristanol, and methyl isobutyl carbinol (MIBC).

The disclosed phosphorus-containing compound can be used as a starting material to yield a sulfur-containing, phosphorus-containing compound. In an aspect, a sulfur-containing compound can be mixed, blended, and/or reacted with a phosphorus-containing compound, such as those described above, and a nitrogen-containing compound to yield the sulfur-containing, phosphorus-containing compound. In an aspect, there is contemplated a composition comprising a reaction product of a phosphorus-containing compound, a nitrogen-containing compound, and a sulfur-containing compound. The sulfur-containing, phosphorus-containing compound can provide improved antiwear properties as compared to a non- sulfur-containing, phosphorus-containing compound.

The sulfur-containing compound can be any compound that comprises free and/or active sulfur. Non-limiting examples of sulfur-containing compounds include sulfurized animal or vegetable fats or oils, sulfurized animal or vegetable fatty acid esters, fully or partially esterified esters of trivalent or pentavalent acids of phosphorus, sulfurized olefins, dihydrocarbyl polysulfides, sulfurized Diels-Alder adducts, sulfurized dicyclopentadiene, sulfurized or co-sulfurized mixtures of fatty acid esters and monounsaturated olefin, co-sulfurized blends of fatty acid, fatty acid ester and α-olefin, functionally-substituted dihydrocarbyl polysulfides, thio-aldehydes, thio-ketones and derivatives thereof (e.g., acids, esters, imines, or lactones), epithio compounds, sulfur-containing acetal derivatives, co-sulfurized blends of terpene and acyclic olefins, polysulfide olefin products, and elemental sulfur.

In an aspect, the sulfur-containing compound can be made by reacting an olefin, such as isobutene, with sulfur. The product, e.g., sulfurized isobutylene or sulfurized polyisobutylene, typically has a sulfur content of about 10 to about 55%, for example about 30 to about 50% by weight. A wide variety of other olefins or unsaturated hydrocarbons, e.g., isobutene dimer or trimer, can be used to form such sulfur-containing compounds.

In another aspect, polysulfides composed of one or more compounds represented by the formula: R²⁰ -Sₓ -R²¹ where R²⁰ and R²¹ can be hydrocarbyl groups each of which can contain from about 3 to about 18 carbon atoms and x can be in the range of from about 2 to about 8, for example in the range of from about 2 to about 5, and as a further example can be 3. The hydrocarbyl groups can be of widely varying types such as alkyl, cycloalkyl, alkenyl, aryl, or aralkyl. Tertiary alkyl polysulfides such as di-tert-butyl trisulfide, and mixtures comprising di-tert-butyl trisulfide (e.g., a mixture composed principally or entirely of the tri, tetra-, and pentasulfides) can be used. Examples of other useful dihydrocarbyl polysulfides include the diamyl polysulfides, the dinonyl polysulfides, the didodecyl polysulfides, and the dibenzyl polysulfides.

The sulfur-containing compound can be used in at least an equimolar or greater amount per equivalent of phosphorus-containing compound to yield a sulfur-containing, phosphorus-containing compound. In an aspect, from about 1 to about 1.5 molar equivalents of the sulfur-containing compound can be used.

The sulfur-containing compound can also be present in a finished lubricant composition in an amount ranging from about 0.5 wt. % to about 10 wt.%, for example from about 2 to about 6 wt.%, and as further example from about 5 wt.% relative to the total weight of the finished lubricant composition.

As disclosed above, a nitrogen-containing compound can be present in the disclosed composition. In an aspect, the nitrogen-containing compound can be used to yield a sulfur-containing, phosphorus-containing compound, and/or its analogous salt. Moreover, as disclosed below, in another aspect, the nitrogen-containing compound can be combined with an acid, wherein at least one of the acid and the nitrogen-containing compound is a friction modifier. Further, as disclosed below, in a further aspect, the nitrogen-containing compound can be a dispersant and can be optionally borated and/or phosphorylated.

The nitrogen-containing compound can be any nitrogen-containing compound, such as an amide of the structure R³CONR⁴R⁵ wherein R³, R⁴ and R⁵ can be each independently hydrogen or a hydrocarbyl group containing from about 1 to about 30 carbon atoms or an ethoxylated amide of the structure 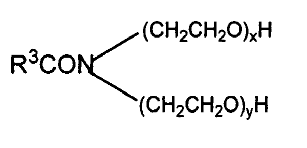 wherein the sum of x and y can be from about 1 to about 50, for example from about 1 to about 20, and as a further example from about 1 to about 10. In an aspect, when R³, R⁴ and R5 are hydrocarbyl groups, they contain from about 1 to about 18 carbon atoms and for example from about 1 to about 6 carbon atoms.

When R³ is hydrogen and R⁴ and R⁵ are hydrocarbyl groups, the nitrogen-containing compound is a dihydrocarbyl formamide. Non-limiting examples of dihydrocarbylformamides having utility herein can include: dimethylformamide, diethylformamide, dipropylformamide, methylethylformamide, dibutylformamide, methylbutylformamide, ethylbutylformamide, dioleylformamide, distearylformamide, didecylformamide, ditridecylformamide, decyltridecylformamide, decyloleylformamide, and tridecyloleylformamide, etc.

When R³ is a hydrocarbyl group and R⁴ and R⁵ are both hydrogen, the nitrogen-containing compound is a primary hydrocarbyl amide. Non-limiting examples of primary hydrocarbyl amides can include acetamide, propionamide, butyramides, valeramide, lauramide, myristamide and palmitamide. Some commercial simple fatty acid amides are available from Armak Company: coco fatty amide, octadecanamide, hydrogenated tallow fatty amide, oleamide, and 13-docosenamide.

When R³ and R⁴ are both hydrocarbyl groups and R⁵ is hydrogen, the nitrogen-containing compound is an N-substituted amide. Non-limiting examples of N-substituted amides can include N-methylacetamide, N-ethylacetamide, N-methylvaleramide, N-propyllauramide, N-methyloleamide and N-butylstearamide.

When R³, R⁴ and R⁵ are all hydrocarbyl groups, the nitrogen-containing compound is an N,N-disubstituted amide. Non-limiting examples of N,N-disubstituted amides can include N,N-dimethylacetamide, N-methyl-N-ethylacetamide, N,N-diethylpropionamide, N,N-dibutylvaleramide, N,N-diethylstearamide, and N,N-dimethyloleamide.

Additional non-limiting examples of the nitrogen-containing compound include N,N-bis(2-hydroxyethyl)dodecanamide, N,N-bis(2-hydroxyethyl) coco fatty acid amide, N,N-bis(2-hydroxyethyl)oleamide, N-2-hydroxyethylcocamide, and N-2-hydroxyethylstearamide.

In an aspect, the sulfur-containing, phosphorus-containing compound can be at least one of formulae (II) and (V): 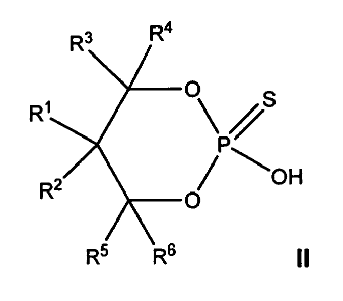 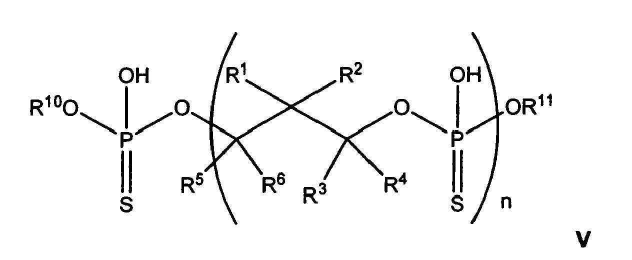 wherein n is an integer from about 1 to about 5; and
wherein R¹, R², R³, R⁴, R⁵, R⁶, R¹⁰, and R¹¹ can be independently selected from the group consisting of hydrogen, cyano, and hydrocarbyl groups comprising from about 1 to about 30 carbon atoms, for example from about 1 to about 20 carbon atoms, and as a further example from about 1 to about 10 carbon atoms..

In an aspect, in formula (II) R¹ and R² can be methyl; and R³, R⁴, R⁵, and R⁶ can be hydrogen. In another aspect, in formula (V), R¹ and R² can be methyl; R³, R⁴, R⁵, and R⁶ can be hydrogen; and R¹⁰ and R¹¹ can be alkyl groups comprising from about 1 to about 6 carbon atoms.

The disclosed composition can comprise a salt of the sulfur-containing, phosphorus containing compound. In an aspect, the salt can be prepared by (a) providing a phosphorus-containing compound, a sulfur-containing compound, and a nitrogen-containing compound, such as an amide; and (b) providing the resultant sulfur-containing, phosphorus-containing compound with an additional nitrogen-containing compound, such as an amine to yield the salt. In another aspect, the salt can be prepared by providing a phosphorus-containing compound, a sulfur-containing compound, and a nitrogen-containing compound, such as an amine.

The sulfurized neopentyl glycol phosphite and/or its salt can have improved antiwear as compared to a non-sulfurized neopentyl glycol phosphite.

The disclosed process can include the use of solvents. The solvent can be any inert fluid substance in which at least one of the reactants is soluble or the product is soluble. Non-limiting examples include benzene, toluene, xylene, n-hexane, cyclohexane, naphtha, diethyl ether carbitol, dibutyl ether dioxane, chlorobenzene, nitrobenzene, carbon tetrachloride, chloroform, base oil, such as gas-to liquid and polyalphaolefin, and process oil.

In an aspect, the nitrogen-containing compound can help neutralize any acids present in the disclosed composition. Any nitrogen-containing compound can be used so long as it is oil-soluble. Additional, non-limiting examples of the nitrogen-containing compound can include an amide, an amine, and a pyridine. In an aspect, the nitrogen-containing compound can be an amine, which can be primary, secondary, or tertiary.

In an aspect, the hydrocarbyl amines can be primary hydrocarbyl amines comprising from about 4 to about 30 carbon atoms in the hydrocarbyl group, and for example from about 8 to about 20 carbon atoms in the hydrocarbyl group. The hydrocarbyl group can be saturated or unsaturated. Representative examples of primary saturated amines are those known as aliphatic primary fatty amines. Typical fatty amines can include alkyl amines such as n-hexylamine, n-octylamine, n-decylamine, n-dodecylamine, n-tetradecylamine, n-pentadecylamine, n-hexadecylamine, n-octadecylamine (stearyl amine), etc. These primary amines are available in both distilled and technical grades. While the distilled grade can provide a purer reaction product, amides and imides can form in reactions with the amines of technical grade. Also suitable are mixed fatty amines.

In an aspect, the amine salts of the disclosed compounds can be those derived from tertiary-aliphatic primary amines having at least about 4 carbon atoms in the alkyl group. For the most part, they can be derived from alkyl amines having a total of less than about 30 carbon atoms in the alkyl group.

Usually the tertiary aliphatic primary amines are monoamines represented by the formula 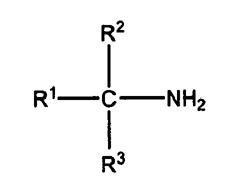 wherein R¹, R², and R³ can be the same or different and can be a hydrocarbyl group containing from about one to about 30 carbon atoms. Such amines are illustrated by tertiary-butyl amine, tertiary-hexyl primary amine, 1-methyl-1-amino-cyclohexane, tertiary-octyl primary amine, tertiary-decyl primary amine, tertiary-dodecyl primary amine, tertiary-tetradecyl primary amine, tertiary-hexadecyl primary amine, tertiary-octadecyl primary amine, tertiary-tetracosanyl primary amine, and tertiary-octacosanyl primary amine.

Mixtures of amines can also be useful for the purposes of this disclosure. Illustrative of amine mixtures of this type can be a mixture of C₈-C₁₆ tertiary alkyl primary amines and a similar mixture of C₁₄ -C₂₄ tertiary alkyl primary amines. The tertiary alkyl primary amines and methods for their preparation are well known to those of ordinary skill in the art and, therefore, further discussion is unnecessary. The tertiary alkyl primary amine useful for the purposes of this disclosure and methods for their preparation are described in U.S. Pat. No. 2,945,749, which is hereby incorporated by reference for its teaching in this regard.

Primary amines in which the hydrocarbon chain comprises olefinic unsaturation also can be quite useful. Thus, the R' and R" groups can contain at least one olefinic unsaturation depending on the length of the chain, usually no more than one double bond per 10 carbon atoms. Representative amines are dodecenylamine, myristoleylamine, palmitoleylamine, oleylamine and linoleylamine.

Secondary amines include dialkylamines having two of the above alkyl groups including fatty secondary amines, and also mixed dialkylamines where R' can be a fatty amine and R" can be a lower alkyl group (1-9 carbon atoms) such as methyl, ethyl, n-propyl, i-propyl, butyl, etc., or R" can be an alkyl group bearing other nonreactive or polar substituents (CN, alkyl, carbalkoxy, amide, ether, thioether, halo, sulfoxide, sulfone). The fatty polyamine diamines can include mono-or dialkyl, symmetrical or asymmetrical ethylene diamines, propane diamines (1,2, or 1,3), and polyamine analogs of the above. Suitable fatty polyamines include N-coco-1,3-diaminopropane, N-soyaalkyl trimethylenediamine, N-tallow-1,3-diaminopropane, and N-oleyl-1,3-diaminopropane.

In an aspect, the nitrogen-containing compound can be provided in an amount ranging from about 0.05 to about 2, and for example from about 1 to about 1.5 molar equivalent per equivalent of phosphorus-containing compound.

The sulfur-containing, phosphorus-containing compound and/or its salt can be formed separately and then added to a lubricating or functional fluid composition. Alternatively, the sulfur-containing, phosphorus-containing compound and/or its salt can be formed when the phosphorus-containing compound, such as the disclosed phosphite, is blended, mixed and/or reacted with other components to form the lubricating or functional fluid composition.

The salt of a sulfur-containing, phosphorus-containing compound can be oil-soluble, i.e., the hydrocarbyl chains of the salt can be of sufficient length, such as at least six carbon atoms, so that the resultant compound is soluble in a formulated composition. The incorporation of hydrophobic groups can lead to an increase in solubility in a non-polar media. Non-limiting examples of a salt of a sulfur-containing, phosphorus-containing compound include diisobutyl thiophosphoric acid C₈₋₁₆ tertiary alkyl primary amine salt, di-2-ethylhexyl-thiophosphoric acid C₈₋₁₆ tertiary alkyl primary amine salt, and neopentyl glycol thiophosphoric acid C₈₋₁₆ tertiary alkyl primary amine salt. In an aspect, there is contemplated a salt of a dithiophosphoric acid. In another aspect, the salt of the sulfur-containing, phosphorus-containing compound can be at least one of a compound of formulae (III) and (VI) shown below. 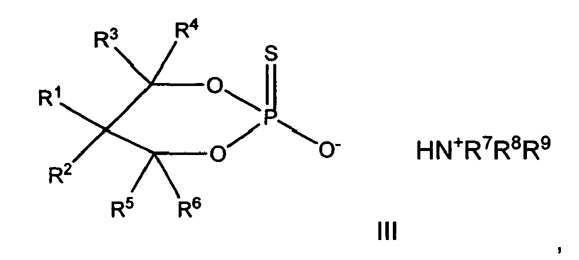 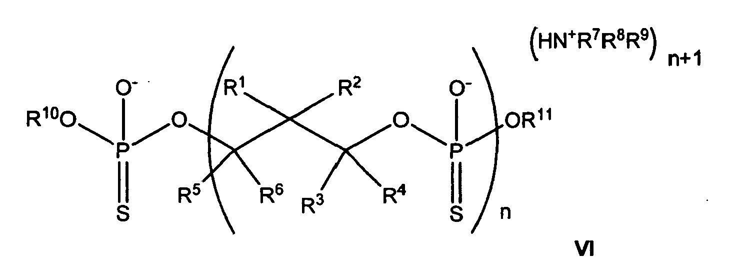 wherein n is an integer from 1 to 5; and
wherein R¹, R², R³, R⁴, R⁵, R⁶, R⁷, R⁸, R⁹, R¹⁰, and R¹¹ are independently selected from the group consisting of hydrogen, cyano, and hydrocarbyl groups comprising from about 1 to about 30 carbon atoms, for example from about 1 to about 20 carbon atoms, and as a further example from about 1 to about 10 carbon atoms. In an aspect, in formula (VI) R¹ and R² can be methyl; R³, R⁴, R⁵, R⁶, R⁷, and R⁸ can be hydrogen; R⁹ can be a tertiary C₁₂₋₁₄ alkyl group; and R¹⁰ and R¹¹ can be alkyl groups comprising from about 1 to about 6 carbon atoms. In an aspect, in formula (III), R³, R⁴, R⁵, R⁶, R⁷, and R⁸ can be hydrogen; R¹ and R² can be methyl; and R⁹ can be a tertiary C₁₂₋₁₄ alkyl group.

In an aspect, a salt of the sulfur-containing, phosphorus-containing compound can be present in a lubricant composition in any amount necessary to provide at least one of reduced high frequency reciprocating rig performance, temperature reduction in a simulated use axle efficiency test, and reduced temperature in a simulated trailer towing test. For example, the salt can be present in an amount ranging from about 0.1 to about 10 wt.%, for example from about 0.3 to about 8 wt.%, and as a further example from about 0.3 to 6 wt.% relative to the total weight of the lubricant composition.

The disclosed composition can further comprise an acid, and a nitrogen-containing compound, wherein at least one of the acid and the nitrogen-containing compound is a friction modifier. A friction modifier is understood to mean a compound comprising from about 10 to about 24 carbon atoms. In an aspect, the composition can comprise a friction modifying acid and a nitrogen-containing compound. In another aspect, the composition can comprise an acid and a friction modifying nitrogen-containing compound. In a further aspect, the composition can comprise a friction modifying acid and a friction modifying nitrogen-containing compound.

The acid for use in the disclosed composition can be at least one of an organic carboxylic acid, organic phosphorus acid, organic sulfonic acid, inorganic phosphorus acid, and a mixture thereof. In an aspect, the organic carboxylic acid can be linear or branched, saturated or unsaturated, and can comprise from about 5 to about 40, and for example from about 10 to about 24 carbon atoms. The organic carboxylic acid can be aliphatic. Non-limiting examples of the carboxylic acid include octenoic acid, isostearic acid, steric acid, and a mixture thereof.

In an aspect, the acid can be an organic phosphorus acid, such as those disclosed above, dialkyl phosphorus acid, monoalkyl phosphorus acid, dialkyl dithiophosphorus acid, monoalkyl dithiophosphorus acid, dialkyl thiophosphorus acid, monoalkyl thiophosphorus acid, and a mixture thereof. Non-limiting examples of the phosphorus acid can include amyl acid phosphate, 2-ethylhexyl acid phosphate, dialkyl dithiophosphorus acid, and a mixture thereof.

The acid can be the same or different from the phosphorus-containing compound disclosed above. Moreover, the nitrogen-containing compound present in the disclosed composition can be the same or different from the nitrogen-containing compound disclosed above, which can be used to make either the sulfur-containing, phosphorus-containing compound, and/or its analogous salt.

In an aspect, the acid can be at least one of 2-ethylhexyl acid phosphate and amyl acid phosphate, and the nitrogen-containing compound can be an oleyl amine.

The lubricant composition disclosed herein can comprise two different nitrogen-containing compounds. In an aspect, the compound can comprise a linear amine, such as oleyl amine, and a branched amine, such as a mixture of C₁₁₋₁₄ tertiary alkyl primary amine. The amines can each be present in the lubricating composition in an amount so that the total weight percent of the amines ranges from about 0.1 to about 5, as a further example from about 0.3 to about 2, and as a further example from about 0.4 to about 0.9 wt.%.

Base oils suitable for use in formulating compositions according to the invention can include any of the synthetic oils. In an aspect, the base oil can comprise a polyalphaolefin as disclosed in U.S. Patent Application No. 2005/0059563, published March 17, 2005. In another aspect, the base oil can comprise a base oil composition including a low viscosity basestock, an ester, and a viscosity index improver. The base oil composition can have a viscosity index greater than or equal to 200, for example greater than or equal to 220, as a further example greater than or equal to 240, as a further example greater than or equal to 260, and as a further example greater than or equal to 280. Further, oils derived from a gas-to-liquid process are also suitable.

The base oil can be present in a major amount, wherein "major amount" is understood to mean greater than or equal to 30%, for example from about 40 to about 80 percent by weight of the lubricant composition.

Non-limiting examples of synthetic basestock include hydrocarbon oils such as polymerized and interpolymerized olefins (e.g., polybutylenes, polypropylenes, propylene isobutylene copolymers, etc.); polyalphaolefins; alkylbenzenes (e.g., dodecylbenzenes, tetradecylbenzenes, di-nonylbenzenes, di-(2-ethylhexyl)benzenes, etc.); polyphenyls (e.g., biphenyls, terphenyl, alkylated polyphenyls, etc.); alkylated diphenyl ethers and alkylated diphenyl sulfides and the derivatives, analogs and homologs thereof and the like.

Alkylene oxide polymers and interpolymers and derivatives thereof where the terminal hydroxyl groups have been modified by esterification, etherification, etc., constitute another class of known synthetic basestock that can be used. Such basestock can be exemplified by the oils prepared through polymerization of ethylene oxide or propylene oxide, the alkyl and aryl ethers of these polyoxyalkylene polymers (e.g., methyl-polyisopropylene glycol ether having an average molecular weight of about 1000, diphenyl ether of polyethylene glycol having a molecular weight of about 500-1000, diethyl ether of polypropylene glycol having a molecular weight of about 1000-1500, etc.) or mono- and polycarboxylic esters thereof, for example, the acetic acid esters, mixed C₃₋₈ fatty acid esters, or the C₁₃ Oxo acid diester of tetraethylene glycol.

Hence, the base oil used which can be used to make the compositions as described herein can be selected from any of the base oils in Groups IV and V as specified in the American Petroleum Institute (API) Base Oil Interchangeability Guidelines. Such base oil groups are as follows:

Group IV are polyalphaolefins (PAO); and Group V include all other basestocks not included in Group I, II, III or IV. The polyalphaolefins used as basestock typically have viscosities in the range of 2 to 100 cSt at 100°C., for example 4 to 8 cSt at 100°C.

Basestocks suitable for use herein can be made using a variety of different processes including but not limited to distillation, solvent refining, hydrogen processing, oligomerisation, esterification, and re-refining.

The base oil can be an oil derived from Fischer-Tropsch synthesized hydrocarbons. Fischer-Tropsch synthesized hydrocarbons can be made from synthesis gas containing H₂ and CO using a Fischer-Tropsch catalyst. Such hydrocarbons typically require further processing in order to be useful as the base oil. For example, the hydrocarbons can be hydroisomerized using processes disclosed in U.S. Pat. No. 6,103,099 or 6,180,575; hydrocracked and hydroisomerized using processes disclosed in U.S. Pat. No. 4,943,672 or 6,096,940; dewaxed using processes disclosed in U.S. Pat. No. 5,882,505; or hydroisomerized and dewaxed using processes disclosed in U.S. Pat. No. 6,013,171; 6,080,301; or 6,165,949.

Unrefined, refined and rerefined oils, either mineral or synthetic (as well as mixtures of two or more of any of these) of the type disclosed hereinabove can be used in the base oils. Unrefined oils are those obtained directly from a mineral or synthetic source without further purification treatment. For example, a shale oil obtained directly from retorting operations, a petroleum oil obtained directly from primary distillation or ester oil obtained directly from an esterification process and used without further treatment would be an unrefined oil. Refined oils are similar to the unrefined oils except they have been further treated in one or more purification steps to improve one or more properties. Many such purification techniques are known to those skilled in the art such as solvent extraction, secondary distillation, acid or base extraction, filtration, percolation, etc. Rerefined oils are obtained by processes similar to those used to obtain refined oils applied to refined oils which have been already used in service. Such rerefined oils are also known as reclaimed or reprocessed oils and often are additionally processed by techniques directed to removal of spent additives, contaminants, and oil breakdown products.

Esters suitable for use herein include the esters of monobasic acids with either monoalkanols or polyols. Suitable ester includes those having the formula RCO₂R¹, wherein R comprises an alkyl radical having from about 4 to about 10 carbon atoms and R¹ comprises an alkyl radical having from about 4 to about 15, for example from about 4 to about 12, and as a further example from about 4 to about 9 carbon atoms. Specific examples of these types of esters include isononyl 2-ethylhexanoate, isooctyl 2-ethylhexanoate, 2-ethylhexyl 2-ethylhexanoate, isononyl heptanoate, isononyl isopentanoate, isooctyl heptanoate, isononyl pentanoate, isooctyl isopentanoate, isooctyl pentanoate, octyl pentanoate, nonyl pentanoate, decyl pentanoate, octyl heptanoate, nonyl heptanoate, decyl heptanoate. Other suitable esters comprise mixtures of esters formed by the reaction of isononyl alcohol and a mixture of acids having from about 8 carbon atoms to about 10 carbon atoms or a mixed ester formed by the reaction of 2-ethylhexyl alcohol and a mixture of acids having from about 8 carbon atoms to about 10 carbon atoms.

Also suitable are esters of dicarboxylic acids (e.g., phthalic acid, succinic acid, alkyl succinic acids, alkenyl succinic acids, maleic acid, azelaic acid, suberic acid, sebacic acid, fumaric acid, adipic acid, linoleic acid dimer, malonic acid, alkyl malonic acids, alkenyl malonic acids, etc.) with a variety of alcohols (e.g., butyl alcohol, hexyl alcohol, dodecyl alcohol, 2-ethylhexyl alcohol, ethylene glycol, diethylene glycol monoether, propylene glycol, etc.) Specific examples of these esters include dibutyl adipate, di(2-ethylhexyl)sebacate, di-n-hexyl fumarate, dioctyl sebacate, diisooctyl azelate, diisodecyl azelate, dioctyl phthalate, didecyl phthalate, dieicosyl sebacate, the 2-ethylhexyl diester of linoleic acid dimer, the complex ester formed by reacting one mole of sebacic acid with two moles of tetraethylene glycol and two moles of 2-ethylhexanoic acid and the like.

Also suitable for the present disclosure are esters, such as those obtained by reacting one or more polyhydric alcohols, for example the hindered polyols such as the neopentyl polyols, e.g., neopentyl glycol, with monocarboxylic acids containing from 5 to 10 carbons. The acids can be linear or branched aliphatic acids, or mixtures thereof. Other suitable esters can be obtained by reaction of the above described acids and di- or tri-ethylene glycol or di-or tri-propylene glycol alcohols capped with linear hydrocarbons having 1 to 4 carbons, for example 3 to 4 carbons.

The ester can have a viscosity of less than or equal to about 2 cSt at 100°C, for example less than or equal to 1.5, and as a further example greater than or equal to about 1 cSt at 100°C.

A suitable viscosity index improver can be a high viscosity polyalphaolefin. High viscosity PAOs, such as known PAO materials, which typically comprise relatively low molecular weight hydrogenated polymers or oligomers of alphaolefins. The alphaolefins include, but are not limited to, C₂ to about C₃₂ alphaolefins with the C₈ to about C₁₆ alphaolefins, such as 1-octene, 1-decene, 1-dodecene and the like being exemplary. Suitable polyalphaolefins include polypropenes, polyisobutenes, poly-1-butenes, poly-1-hexenes poly-1-octene, poly-1-decene, and poly-1-dodecene, although the dimers of higher olefins in the range of C₁₄ to C₁₈ provide low viscosity basestocks. Included are homopolymers, interpolymers and mixtures.

Suitable high viscosity PAOs may be conveniently made by the polymerization of an alphaolefin in the presence of a polymerization catalyst such as the Friedel-Crafts catalysts including, for example, aluminum trichloride, boron trifluoride or complexes of boron trifluoride with water, alcohols such as ethanol, propanol or butanol, carboxylic acids or esters such as ethyl acetate or ethyl propionate. For example, the methods disclosed by U.S. Pat. Nos. 4,149,178 or 3,382,291, the disclosures of which are hereby incorporated by reference, may be conveniently used herein. Other descriptions of PAO synthesis are found in the following U.S. Pat. No. 3,742,082 (Brennan); U.S. Pat. No. 3,769,363 (Brennan); U.S. Pat. No. 3,876,720 (Heilman); U.S. Pat. No. 4,239,930 (Allphin); U.S. Pat. No. 4,367,352 (Watts); U.S. Pat. No. 4,413,156 (Watts); U.S. Pat. No. 4,434,408 (Larkin); U.S. Pat. No. 4,910,355 (Shubkin); U.S. Pat. No. 4,956,122 (Watts); and U.S. Pat. No. 5,068,487 (Theriot), the disclosures of which are hereby incorporated by reference.

Suitable high viscosity PAOs may be prepared by the action of a reduced chromium catalyst with the alphaolefin, such PAOs are described in U.S. Pat. No. 4,827,073 (Wu); U.S. Pat. No. 4,827,064 (Wu); U.S. Pat. No. 4,967,032 (Ho et al.); U.S. Pat. No. 4,926,004 (Pelrine et al.); and, U.S. Pat. No. 4,914,254 (Pelrine), the disclosures of which are hereby incorporated by reference. The dimers of the C₁₄ to C₁₈ olefins are described in U.S. Pat. No. 4,218,330, the disclosure of which is hereby incorporated by reference.

Suitable high viscosity PAOs may include PAOs having a viscosity of greater than or equal to about 40 cSt at 100° C and less than or equal to about 1,000 cSt at 100° C. As another example, greater than or equal to 100 cSt at 100° C and less than or equal to about 300 cSt at 100° C. As a further example, greater than or equal to about 100 cSt at 100° C and less than or equal to about 200 cSt at 100° C. As an even further example, greater than or equal to about 150 cSt at 100°C and less than or equal to about 200 cSt.

Group IV basestocks, i.e. polyalphaolefins (PAO) include hydrogenated oligomers of an alpha-olefin, the most important methods of oligomerisation being free radical processes, Ziegler catalysis, and cationic, Friedel-Crafts catalysis.

The composition can optionally further comprise a boron-containing compound. The boron-containing compound can be present in the composition in an amount ranging from about 5ppm to about 500 ppm, for example from about 11 ppm to about 100 ppm. The amount of boron compound employed ranges from about 0.001 mole to about 1 mole per mole of basic nitrogen and/or hydroxyl in the mixture.

The boron-containing compound can be an inorganic or an organic compound. The inorganic compounds include boron acids, anhydrides, oxides and halides. The organic boron compounds include the boron amides and esters. Also included are borated acylated amines and borated dispersants, borated epoxides and the borated fatty acid esters of glycerol.

The boron-containing compounds that are useful include boron oxide, boron oxide hydrate, boron trioxide, boron trifluoride, boron tribromide, boron trichloride, boron acids such as boronic acid (i.e., alkyl-B(OH)₂ or aryl-B(OH)₂), boric acid (i.e., H₃BO₃), tetraboric acid (i.e., H₂B₄O₇), metaboric acid (i.e., HBO₂), boron anhydrides, boron amides and various esters of such boron acids. Complexes of boron trihalide with ethers, organic acids, inorganic acids, or hydrocarbons can be used. Examples of such complexes include boron-trifluoride-triethyl ester, boron trifluoride-phosphoric acid, boron trichloride-chloroacetic acid, boron tribromide-dioxane, and boron trifluoridemethyl ethyl ether.

Specific examples of boronic acids include methyl boronic acid, phenylboronic acid, cyclohexyl boronic acid, p-heptylphenyl boronic acid and dodecyl boronic acid. Suitable boron-containing compounds include, for example, boron oxides such as boron oxide, boron oxide hydrate, and boron trioxide.

The boron acid esters include mono-, di-, and tri-organic esters of boric acid with alcohols or phenols such as, e.g., methanol, ethanol, isopropanol, butanol, pentanol, hexanol, cyclohexanol, cyclopentanol, 1-octanol, 2-octanol, dodecanol, behenyl alcohol, oleyl alcohol, stearyl alcohol, benzyl alcohol, 2-butyl cyclohexanol, ethylene glycol, propylene glycol, trimethylene glycol, 1,3-butanediol, 2,4-hexanediol, 1,2-cyclohexanediol, 1,3-octanediol, glycerol, pentaerythritol diethylene glycol, carbitol, Cellosolve, triethylene glycol, tripropylene glycol, phenol, naphthol, p-butylphenol, o,p-diheptylphenol, n-cyclohexylphenol, 2,2-bis-(p-hydroxyphenyl)-propane, polyisobutene (molecular weight of 1500)-substituted phenol, ethylene chlorohydrin, o-chlorophenol, m-nitrophenol, 6-bromooctanol, and 7-keto-decanol. Lower alcohols, 1,2-glycols, and 1-3-glycols, i.e., those having less than about 8 carbon atoms can be useful for preparing the boric acid esters.

In an aspect, the boron-containing compound can be a borated nitrogen-containing compound, including, but not limited to the nitrogen-containing compounds disclosed above. In an aspect, a borated nitrogen-containing compound can be a dispersant.

In another aspect, the boron-containing compound can be a borated phosphorus-containing compound, including, but not limited to the phosphorus-containing compounds disclosed above. In an aspect, a borated phosphorus-containing compound can be a dispersant. The amount of phosphorus compound employed ranges from about 0.001 mole to 1 mole per mole of basic nitrogen and free hydroxyl in the reaction mixture up one half of which may be contributed by an auxiliary nitrogen compound.

The phosphorus-containing dispersants can comprise at least one oil-soluble ashless dispersant having a basic nitrogen and/or at least one hydroxyl group in the molecule. Suitable dispersants include alkenyl succinimides, alkenyl succinic acid esters, alkenyl succinic ester-amides, Mannich bases, hydrocarbyl polyamines, or polymeric polyamines.

The alkenyl succinimides in which the succinic group contains a hydrocarbyl substituent containing at least 30 carbon atoms are described for example in U.S. Pat. Nos. 3,172,892; 3,202,678; 3,216,936; 3,219,666; 3,254,025; 3,272,746; and 4,234,435. The alkenyl succinimides can be formed by conventional methods such as by heating an alkenyl succinic anhydride, acid, acid-ester, acid halide, or lower alkyl ester with a polyamine containing at least one primary amino group. The alkenyl succinic anhydride can be made readily by heating a mixture of olefin and maleic anhydride to, for example, about 180-220°C. The olefin can be a polymer or copolymer of a lower mono-olefin such as ethylene, propylene, 1-butene, isobutene and the like and mixtures thereof. An exemplary source of alkenyl group is from polyisobutene having a gel permeation chromatography (GPC) number average molecular weight of up to 10,000 or higher, for example in the range of about 500 to about 2,500, and as a further example in the range of about 800 to about 1,500. In an aspect, the polyisobutylene can have a molecular weight ranging from about 700 to about 5000. The polyisobutylene succinic anhydride to amine ratio can range from about 1.4 to about 3, and as a further example from about 1.8 to about 2.2.

In an aspect, a capping agent can be added. For example, an additional amount of maleic anhydride can be added to function as a capping agent for the basic nitrogen thereby reducing the basic nitrogen to a non-basic species.

As used herein the term "succinimide" is meant to encompass the completed reaction product from reaction between one or more polyamine reactants and a hydrocarbon-substituted succinic acid or anhydride (or like succinic acylating agent), and is intended to encompass compounds wherein the product may have amide, amidine, and/or salt linkages in addition to the imide linkage of the type that results from the reaction of a primary amino group and an anhydride moiety.

The dispersants can be phosphorylated by procedures described, for example, in U.S. Pat. Nos. 3,184,411; 3,342,735; 3,403,102; 3,502,607; 3,511,780; 3,513,093; 3,513,093; 4,615,826; 4,648,980; 4,857,214 and 5,198,133.

Methods for borating the various types of ashless dispersants described above are described in U.S. Pat. Nos. 3,087,936; 3,254,025; 3,281,428; 3,282,955; 2,284,409; 2,284,410; 3,338,832; 3,344,069; 3,533,945; 3,658,836; 3,703,536; 3,718,663; 4,455,243; and 4,652,387.

Procedures for phosphorylating and borating ashless dispersants such as those referred to above are set forth in U.S. Pat. Nos. 4,857,214 and 5,198,133.

The lubricant composition can comprise two different nitrogen-containing dispersants, such as a succinimide dispersant, and a borated succinimide dispersant.

Optionally, other components can be present in the lubricant composition or additive composition. Non-limiting examples of other components include diluents, defoamers, demulsifiers, copper corrosion inhibitors, antioxidants, extreme pressure agent, antiwear agent, seal swell agent, pour point depressants, rust inhibitors and friction modifiers.

Also disclosed herein is a method of lubricating a machine, such as an automotive gear, a stationary gearbox (including an industrial gear), and/or an axle with the disclosed lubricating composition. In a further aspect, there is disclosed a method of improving at least one of antiwear protection and fuel efficiency in a machine, such as an automotive gear, a stationary gearbox (including an industrial gear), and/or an axle comprising placing the disclosed lubricating composition in the machine, such as an automotive gear, a stationary gearbox (including an industrial gear), and/or an axle. There is also disclosed a method of passing ASTM D6121 with lubrited and nonlubrited gear sets, for example at least about 325 °F for at least about 16 hours, and/or ASTM D5704 and/or a method of maintaining GL-5 and/or SAE J2360 performance comprising lubricating a gear and/or axle with the disclosed lubricating composition.

### EXAMPLES

A lubricant composition was formulated as follows as shown in Table 1:

**Table 1**

| Component | Weight Percent |
|---|---|
| A Compound of Formula III | 0.20-1 |
| Base Oil with an Ester | 40-90 |
| High Viscosity PAO VII | 10-40 |
| EP/ AW Agent (s) | 4-6 |
| Pour Point Depressant (s) | 2.5-5 |
| Dispersant (s) | 0.5-4 |
| Amine Rust Inhibitor (s) | 1-2 |
| Anti-Foam Agent (s) | 0.1-2 |
| Demulsifier (s) | 0-0.5 |
| Corrosion Inhibitor (s) | 0.1-1 |
| Anti-oxidant (s) | 0-5 |

A comparative lubricant composition was formulated as follows as shown in Table 2:

**Table 2**

| Component | Weight Percent |
|---|---|
| A compound of Formula III | 0.20-1 |
| Base Oil | 40-90 |
| Ethylene, Propylene Olefin Copolymer VII | 0-20 |
| Seal Swell Agent (s) | 0-10 |
| EP/ AW Agent (s) | 4-6 |
| Pour Point Depressant (s) | 2.5-5 |
| Dispersant (s) | 0.5-4 |
| Amine Rust Inhibitor (s) | 1-2 |
| Anti-Foam Agent (s) | 0.1-2 |
| Demulsifier (s) | 0-0.5 |
| Corrosion Inhibitor (s) | 0.1-1 |

The lubricant composition from Table 1 and the comparative lubricant composition from Table 2 were subjected to the Corporate Average Fuel Economy ("CAFE") test. This test measures the efficiency of an axle, calculated as (total output torque X output speed)/(input torque X input speed), at various load/speed stages and is compared to a baseline fluid. A more efficient axle (i.e., greater test result value) translates into better overall fuel economy for the vehicle. Results of the axle efficiency test are indicative of the CAFE test. The conditions for the various load stages are shown in Table 3. Stages A through E represents city driving cycle whereas Stage F represents the highway driving cycle. The baseline fluid was a full-synthetic SAE 75W-90 axle lubricant (GM Part # 9986115) for General Motors light duty vehicles.

**Table 3**

| Stage | Pinion Speed, rpm | Pinion Torque, N-m | Power, kW | Pinion Torque, lbft | Power, hp |
|---|---|---|---|---|---|
| Warm-up | 1500 | 67.0 | 10.5 | 49.4 | 14.1 |
| A | 750 | 13.6 | 1.1 | 10.0 | 1.4 |
| B | 1250 | 13.6 | 1.8 | 10.0 | 2.4 |
| C | 1000 | 33.9 | 3.5 | 25.0 | 4.8 |
| D | 1580 | 33.9 | 5.6 | 25.0 | 7.5 |
| E | 1000 | 54.2 | 5.7 | 40.0 | 7.6 |
| F | 2560 | 61.0 | 16.4 | 45.0 | 21.9 |

The results for the axle efficiency test are shown in Table 4. The lubricant compositions from Table 1 and Table 2 provided better axle efficiency then the baseline fluid. The lubricant composition from Table 1 gives the best overall results from the axle efficiency test.

**Table 4**

| | Average Axle Efficiency at Different Load/Speed Stage | | | | | |
|---|---|---|---|---|---|---|
| Gear Oil | Stage A | Stage B | Stage C | Stage D | Stage E | Stage F |
| Table 1 comp. | 86.13 | 84.50 | 93.24 | 93.06 | 95.09 | 95.41 |
| Table 2 comp. | 85.31 | 83.72 | 92.78 | 92.78 | 94.86 | 95.23 |
| Baseline Fluid | 82.16 | 80.45 | 91.33 | 91.63 | 94.02 | 94.89 |

For the purposes of this specification and appended claims, unless otherwise indicated, all numbers expressing quantities, percentages or proportions, and other numerical values used in the specification and claims, are to be understood as being modified in all instances by the term "about." Accordingly, unless indicated to the contrary, the numerical parameters set forth in the following specification and attached claims are approximations that can vary depending upon the desired properties sought to be obtained by the present disclosure. At the very least, and not as an attempt to limit the application of the doctrine of equivalents to the scope of the claims, each numerical parameter should at least be construed in light of the number of reported significant digits and by applying ordinary rounding techniques.

It is noted that, as used in this specification and the appended claims, the singular forms "a," "an," and "the," include plural referents unless expressly and unequivocally limited to one referent. Thus, for example, reference to "an antioxidant " includes two or more different antioxidants. As used herein, the term "include" and its grammatical variants are intended to be non-limiting, such that recitation of items in a list is not to the exclusion of other like items that can be substituted or added to the listed items.

While particular embodiments have been described, alternatives, modifications, variations, improvements, and substantial equivalents that are or can be presently unforeseen can arise to applicants or others skilled in the art. Accordingly, the appended claims as filed and as they can be amended are intended to embrace all such alternatives, modifications variations, improvements, and substantial equivalents.

## Claims

1. A lubricating composition comprising:
an ester;
a viscosity index improver; and
at least one of a sulfur-containing, phosphorus-containing compound and a salt of the sulfur-containing, phosphorus-containing compound.

2. The composition of claim 1, wherein the ester has a viscosity less than or equal to about 2 cSt at 100°C.

3. The composition of claim 1 or 2, wherein the ester has the formula RCO₂R¹, wherein R comprises an alkyl radical having from about 4 to about 9 carbon atoms and R1 comprises an alkyl radical having from about 4 to about 15 carbon atoms.

4. The composition of any one of claims 1 to 3, wherein the ester comprises at least one of isononyl 2-ethylhexanoate, isooctyl 2-ethylhexanoate, 2-ethylhexyl 2-ethylhexanoate, isononyl heptanoate, isononyl isopentanoate, isooctyl heptanoate, isononyl pentanoate, isooctyl isopentanoate, isooctyl pentanoate, octyl pentanoate, nonyl pentanoate, decyl pentanoate, octyl heptanoate, nonyl heptanoate, decyl heptanoate and mixtures thereof.

5. The composition of any one of claims 1 to 4, wherein the viscosity Index improver is a polyalphaolefin.

6. The composition of claim 5, wherein the polyalphaolefins has a viscosity of from about 40 to about 1000 cSt at 100°C.

7. The composition of any one of claims 1 to 6, wherein the sterically hindered sulfur-containing, phosphorus-containing compound is at least one of a compound of formulae (II) and (V): 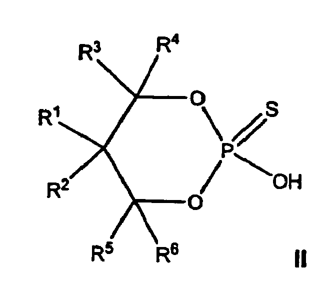 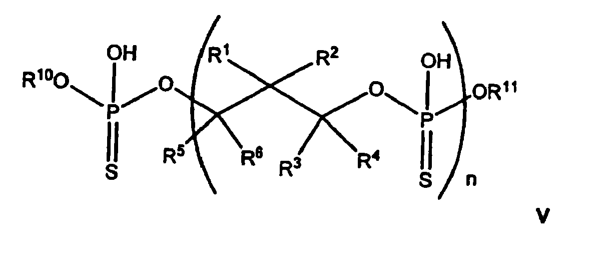 wherein n is an integer from 1 to 5; and
wherein R¹, R², R³, R⁴, R⁵, R⁶, R¹⁰, and R¹¹ are independently selected from the group consisting of hydrogen, cyano, and hydrocarbyl groups comprising from about 1 to about 30 carbon atoms..

8. The composition of claim 7, wherein in formula (II) R¹ and R² are methyl and R³, R⁴, R⁵, and R⁶ are hydrogen.

9. The composition of any of claims 1 to 8, wherein the salt of the sulfur-containing, phosphorus-containing compound is at least one of a compound of formulae (III) and (VI): 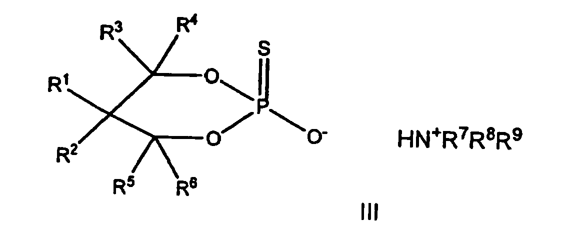 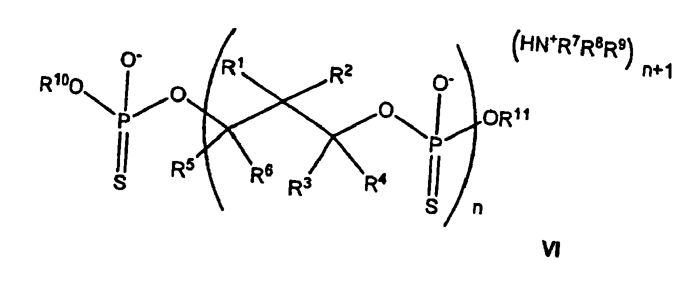 wherein n is an integer from 1 to 5; and
wherein R¹, R², R³, R⁴, R⁵, R⁶, R⁷, R⁸, R⁹, R¹⁰, and R¹¹ are independently selected from the group consisting of hydrogen, cyano, and hydrocarbyl groups comprising from about 1 to about 30 carbon atoms.

10. The composition of claim 9, wherein in formula (III) R³, R⁴, R⁵, R⁶, R⁷ and R⁸ are hydrogen; R¹ and R² are methyl; and R⁹ is a tertiary C₁₂₋₁₄ alkyl group and/or wherein in formula (VI) R¹, R², R³, R⁴, R⁵, R⁶, R⁷ and R⁸ are hydrogen; R⁹ is a tertiary C₁₂₋₁₄ alkyl group; and R¹⁰ and R¹¹ are alkyl groups comprising from about 1 to about 6 carbon atoms.

11. The composition of any one of claims 1 to 10, further comprising a synthetic base oil.

12. The composition of claim 11, wherein the synthetic base oil comprises a polyalphaolefins.

13. The composition of claim 11, wherein the viscosity index of the combination of the synthetic base oil, the viscosity index improver, and the ester is about 200 or greater.

14. The composition of any one of claims 1 to 13, further comprising a gas-to-liquid base oil.

15. The composition of any one of claims 1 to 14, further comprising a boron-containing compound, in particular a borated nitrogen-containing compound and/or a borated phosphorus-containing compound.

16. The composition of claim 15, wherein the boron-containing compound is present in the composition in an amount to provide about 5ppm to about 500 ppm boron.

17. The composition of any one of claims 1 to 16, further comprising an acid and a nitrogen containing compound, wherein at least one of the acid and the nitrogen-containing compound is a friction modifier.

18. The composition of claim 17, wherein the acid is a friction modifier chosen from at least one of an organic carboxylic acid, organic phosphorus acid, organic sulfonic acid, inorganic phosphorus acid, and a mixture thereof.

19. The composition of claim 18, wherein the organic phosphorus acid is at least one of dialkyl phosphorus acid, monoalkyl phosphorus acid, dialkyl dithiophosphorus acid, dialkyl thiophosphorus acid, amyl acid phosphate, 2-ethylhexyl acid phosphate, and a mixture thereof.

20. The composition of claim 17, wherein the nitrogen-containing compound is a friction modifier and is a mixture of C₈₋₁₆ tertiary primary alkyl amine.

21. A method of lubricating an automotive gear comprising using as the lubricant the composition of any one of claims 1 to 20.

22. A method of improving antiwear protection in an automotive gear comprising placing a composition according to any one of claims 1 to 20 in the automotive gear.

23. A method of improving fuel efficiency in an automotive gear comprising placing a composition according to any one of claims 1 to 20 in an automotive gear.

24. A method of lubricating an axle comprising using as the lubricant the composition of any one of claims 1 to 20.

25. A method of improving antiwear protection in an axle comprising placing a composition according to any one of claims 1 to 20 in the axle.

26. A method of improving fuel efficiency in an axle comprising placing a composition according to any one of claims 1 to 20 in the axle.

27. A method of lubricating a stationary gearbox comprising using as the lubricant the composition of any one of claims 1 to 20.

28. A method of improving antiwear protection in a stationary gearbox comprising placing a composition according to any one of claims 1 to 20 in the stationary gearbox.

29. A method of improving fuel efficiency in a stationary gearbox comprising placing a composition according to any one of claims 1 to 20 in the stationary gearbox.

30. A method of passing ASTM D5704 comprising lubricating a gear with a composition according to any one of claims 1 to 20.

31. A method of passing ASTM D6121 with lubrited and nonlubrited gear sets comprising lubricating a gear with a composition according to any one of claims 1 to 20.

32. A method of passing ASTM D6121 with nonlubrited gear sets at least about 325°F for at least about 16 hours comprising lubricating a gear with a composition according to any one of claims 1 to 20.

33. A method of maintaining GL-5 and/or SAE J2360 performance comprising lubricating a gear with a composition according to any one of claims 1 to 20.

34. A lubricating composition comprising an ester; a viscosity Index improver; and a reaction product of a sulfur-containing compound, a phosphorus-containing compound, and a nitrogen-containing compound.
